# FASCICULE DE BREVET EUROPEEN

(11) **EP 2 731 485 B1**
(45) Date de publication et mention de la délivrance du brevet: **04.11.2015**
(21) Numéro de dépôt: 12773009.1
(22) Date de dépôt: 05.07.2012
(51) Int. Cl.: A47J 45/07, A47J 45/10

(54) **DISPOSITIF DE PRÉHENSION AMOVIBLE ÉLECTROMÉCANIQUE**
ELEKTROMECHANISCHE ABNEHMBARE GREIFVORRICHTUNG
ELECTROMECHANICAL REMOVABLE GRIP DEVICE

(30) Priorité: 13.07.2011 FR 1156378
(43) Date de publication de la demande: 21.05.2014
(73) Titulaire: SEB S.A., 69130 Ecully (FR)
(72) Inventeur: BONNEL, Jocelyn, F-73310 Vions (FR); MONTGELARD, Michel, F-73100 Aix Les Bains (FR); HERRADA, José Luis, F-38200 Vienne (FR)
(74) Mandataire: Bourrières, Patrice
(86) Numéro de dépôt international: PCT/FR2012/051575
(87) Numéro de publication internationale: WO 2013/007927

(56) Documents cités:
- EP-A1- 0 769 263
- WO-A2-2007/043000
- DE-A1-102007 054 022
- US-A1- 2006 196 057

## Description

La présente invention concerne un dispositif de préhension amovible pour un récipient de cuisson d'aliments.

Les dispositifs de préhension amovibles ou poignées amovibles sont utilisés pour la préhension d'articles culinaires tels des casseroles ou des poêles. Les dispositifs de préhension amovibles peuvent être fixés momentanément à un article culinaire lors de son utilisation et être libérés de l'article culinaire pour faciliter le stockage de ce dernier.

On connaît le document EP 0 769 263 qui divulgue un dispositif de préhension amovible pour un récipient de cuisson comprenant une paroi latérale. Le dispositif de préhension comprend deux mors formant pince dont un mors mobile en translation par rapport à l'autre mors entre une position ouverte et une position fermée dans laquelle les deux mors formant pince pincent la paroi latérale de l'article culinaire. Le dispositif de préhension comprend également des moyens de déplacement adaptés à déplacer les mors formant pince entre la position ouverte et la position fermée. Les moyens de déplacement comprennent un levier monté en pivotement sur un corps de préhension entre une position écartée et une position escamotée à l'intérieur du corps de préhension. Une lame formant bielle s'étend entre le levier et le mors mobile et est adaptée à déplacer le mors mobile en translation lorsque le levier est pivoté manuellement par l'utilisateur. Pour faire pivoter le levier de la position écartée à la position escamotée, l'utilisateur doit exercée une force relativement importante sur ce dernier. De plus, pour déverrouiller le dispositif de préhension, l'utilisateur doit appuyer à la fois sur un bouton de déverrouillage et ne pas serrer le levier pour permettre son écartement.

Cette manipulation n'est pas pratique pour l'utilisateur qui doit alors utiliser ses deux mains pour le déverrouillage dont une main pour appuyer sur le bouton de déverrouillage et une autre main pour maintenir la poignée.

De plus, une telle poignée amovible de l'art antérieur de permet pas de fournir d'autres fonctions comme le mixage de légume, par exemple. Pour mixer des légumes dans un récipient de cuisson, l'utilisateur doit se munir d'un ustensile supplémentaire tel un mixeur, ce qui pose des problèmes de stockage et d'encombrement lors du rangement des ustensiles.

On connait également le document WO 2007/043000 qui divulgue un dispositif muni d'une source d'énergie électrique.

Ainsi, l'invention vise à remédier à ces inconvénients et à fournir un dispositif de préhension amovible plus facile à utiliser, plus sécurisant, multif onctionnel et permettant de résoudre des problèmes d'encombrement.

L'invention concerne un dispositif de préhension amovible pour un récipient de cuisson d'aliments, ledit dispositif de préhension amovible comprenant un corps de préhension, des moyens de fixation connectables au récipient de cuisson et déconnectables de celui-ci, et une source d'énergie électrique.

Selon l'invention, le dispositif de préhension amovible comprend :
- un dispositif électromécanique alimenté par la source d'énergie et adapté à actionner (une partie au moins d') un dispositif mécanique, et
- des moyens de commande pour commander le fonctionnement et l'arrêt du dispositif électromécanique.

Ainsi, l'invention fournit un dispositif de préhension amovible plus facile à utiliser et nécessitant moins d'efforts pour actionner les mors formant pince. L'ouverture et la fermeture de ces derniers se fait automatiquement. Il y a moins de jeu entre les mors formant pince et la paroi latérale du récipient de cuisson. La sécurité est donc améliorée. Le dispositif de préhension amovible peut également présenter des fonctionnalités supplémentaires qui ne sont pas possibles avec les poignées de l'art antérieur, ce qui permet de fournir une aide à la cuisson. La multifonctionnalité du dispositif de préhension amovible permet d'utiliser un seul ustensile de cuisine au lieu de plusieurs ustensiles, ce qui entraine un gain de place lors du stockage des ustensiles.

D'autres caractéristiques et avantages de l'invention ressortiront clairement de la description qui en est faite ci-après, à titre indicatif et nullement limitatif, en référence aux dessins annexés, dans lesquels :
- la figure 1 représente une coupe longitudinale d'un dispositif de préhension amovible, selon un mode de réalisation de l'invention, en position ouverte ;
- la figure 2 représente une coupe longitudinale de ce dispositif de préhension amovible en position fermée ;
- la figure 3 représente une coupe longitudinale d'un dispositif de préhension amovible comprenant des moyens de blocage du mors mobile ;
- la figure 4 représente une coupe longitudinale d'un dispositif de préhension amovible comprenant un électroaimant en position ouverte, selon un autre mode de réalisation de l'invention ;
- la figure 5 représente une coupe longitudinale du dispositif de préhension amovible selon cet autre mode de réalisation en position fermée ;
- la figure 6 représente une vue en perspective d'un dispositif de préhension amovible muni de contacts;
- la figure 7 représente le dispositif de préhension amovible muni d'une bobine d'induction secondaire en position de rechargement sur une base de rechargement comprenant une bobine d'induction primaire;
- la figure 8 représente un dispositif de préhension amovible comprenant un capteur pour détecter la mise en place du dispositif de préhension sur l'article culinaire ;
- la figure 9 représente le détail du capteur de positionnement ;
- la figure 10 représente une coupe longitudinale d'un dispositif de préhension amovible comprenant un vérin selon un autre mode de réalisation de l'invention ;
- la figure 11 représente une coupe longitudinale d'un dispositif de préhension amovible comprenant un servomoteur selon un autre mode de réalisation de l'invention ;
- la figure 12 représente schématiquement une vue de dessus du servomoteur et du mors mobile en position ouverte ;
- la figure 13 représente schématiquement une vue de dessus du servomoteur et du mors mobile en position fermée ;
- la figure 14 représente une coupe longitudinale d'un dispositif de préhension amovible comprenant un module amovible, selon un mode de réalisation de l'invention ;
- la figure 15 représente une vue de dessus d'un dispositif de préhension amovible comprenant un écran d'affichage ;
- la figure 16 représente une vue de dessus d'un dispositif de préhension amovible comprenant une diode ;
- la figure 17 représente une coupe longitudinale d'un dispositif de préhension amovible fixé sur un récipient et comprenant des moyens de soulèvement d'un couvercle en position de soulèvement ;
- la figure 18 représente ce dispositif de préhension amovible en perspective avec des moyens de soulèvement en position de soulèvement ;
- la figure 19 représente une coupe longitudinale d'un dispositif de préhension amovible fixé sur un récipient et comprenant des moyens de soulèvement en position de repos ;
- la figure 20 représente ce dispositif de préhension amovible en perspective avec des moyens de soulèvement en position de repos ;
- la figure 21 représente une coupe longitudinale d'un dispositif de préhension amovible comprenant une brosse de nettoyage ;
- la figure 22 représente une coupe longitudinale d'un dispositif de préhension amovible dans lequel le mors mobile est formé par une partie avant mobile du corps de préhension, ledit mors mobile étant en position fermée ;
- la figure 23 représente une coupe longitudinale de ce dispositif de préhension amovible dans lequel le mors mobile est en position ouverte ;
- la figure 24 représente une coupe longitudinale d'un dispositif de préhension amovible comprenant un électroaimant comme moyen de blocage.

Le dispositif de préhension amovible 1 comprend un corps de préhension 7, des moyens de fixation connectables au récipient de cuisson 24 et déconnectables de celui-ci, et une source d'énergie électrique 6. Le dispositif de préhension amovible 1 comprend un dispositif électromécanique 5, 5a, 5b, 5c alimenté par la source d'énergie 6 et adapté à actionner un dispositif mécanique et, des moyens de commande 4, 12, 22, 56 pour commander le fonctionnement et l'arrêt du dispositif électromécanique 5, 5a, 5b, 5c.

Les moyens de fixation peuvent comprendre des mors mobiles du type pinces actionnées manuellement ou motorisées telles que décrites ci-dessous, par exemple. En variante, les moyens de fixation peuvent comprendre des crochets solidaires du dispositif de préhension amovible 1 et destinés à s'insérer dans des orifices prévus sur la paroi latérale 25 du récipient de cuisson 24. D'autres moyens de fixation sont également possibles comme un système vis-écrou, par exemple.

De préférence, le dispositif mécanique comprend les moyens de fixation. Le dispositif de préhension amovible 1 comprend un dispositif d'actionnement 3 entrainé par le dispositif électromécanique 5, 5a, 5b, 5c et adapté à actionner les moyens de fixation.

Les moyens de fixation peuvent comprendre deux mors 2a, 2b formant pince dont l'un au moins est mobile par rapport à l'autre et actionné par le dispositif d'actionnement 3. Les moyens de fixation peuvent être fixés à la paroi latérale 25 du récipient de cuisson 24 ou à une autre partie du récipient telle un étrier solidaire de la paroi latérale 25.

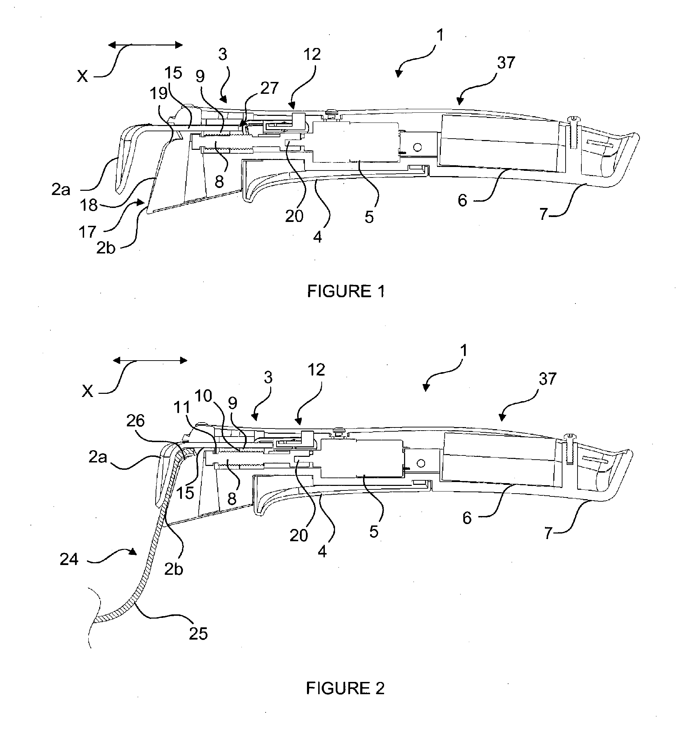

La figure 1 représente une coupe longitudinale d'un dispositif de préhension amovible 1 en position ouverte, selon un mode de réalisation possible.

Dans ce mode de réalisation, le dispositif mécanique comprend les moyens de fixation. Les moyens de fixation comprennent deux mors formant pince 2a, 2b mobiles en translation l'un par rapport à l'autre entre une position ouverte et une position fermée dans laquelle les deux mors formant pince 2a, 2b sont adaptés à pincer la paroi latérale 25 d'un article culinaire ou récipient de cuisson 24. Le dispositif de préhension amovible 1 comprend également un dispositif d'actionnement 3 pour déplacer au moins l'un des mors formant pince 2a, 2b, un dispositif électromécanique 5, 5a, 5b, 5c pour entrainer le dispositif d'actionnement 3, une source d'énergie électrique 6 pour alimenter le dispositif électromécanique 5, 5a, 5b, 5c, et des moyens de commande 4, 12, 22, 56 pour commander le dispositif électromécanique 5, 5a, 5b, 5c.

Le dispositif de préhension amovible 1 comprend un corps de préhension 7 formant poignée dans lequel sont logés le dispositif d'actionnement 3, la source d'énergie électrique 6 et les moyens de commande 4, 12, 22, 56. Le corps de préhension 7 présente une forme allongée et s'étend suivant une direction longitudinale (X).

Les deux mors formant pince 2a, 2b sont disposés à l'extrémité avant du dispositif de préhension amovible 1 et la source d'énergie électrique 6 est disposée à proximité de l'extrémité arrière du dispositif de préhension amovible 1. Les moyens de commande 4, 12, 22, 56, le dispositif électromécanique 5, 5a, 5b, 5c et le dispositif d'actionnement 3 sont disposés entre les deux mors formant pince 2a, 2b et la source d'énergie électrique 6. D'autres dispositions sont également possibles. Le dispositif électromécanique 5, 5a, 5b, 5c, le dispositif d'actionnement 3, les deux mors formant pince 2a, 2b et la source d'énergie électrique 6 sont sensiblement alignés suivant la direction longitudinale (X) fournissant une poignée compacte de forme suffisamment allongée pour permettre sa préhension par un utilisateur pour soulever le récipient de cuisson.

Dans les exemples des figures 1 à 3, les moyens de fixation comprennent un seul mors mobile 2a qui est mobile en translation par rapport au corps de préhension 7 suivant la direction longitudinale (X) et un mors fixe 2b solidaire du corps de préhension 7. Le mors mobile 2a est le mors qui présente une surface de contact interne en contact avec la surface interne de la paroi latérale 25 du récipient 24. En variante, les deux mors formant pince 2a, 2b peuvent être mobiles suivant la direction longitudinale (X) et en sens opposé.

Le dispositif de préhension est prévu pour être fixé de façon amovible à un récipient de cuisson 24, du type ustensile culinaire (casserole, poêle, plat à four,...), comportant généralement un fond et une paroi latérale 25 dite jupe. La paroi latérale 25 peut présenter un bord recourbé 26 sur sa partie supérieure qui forme un rebord verseur. Les exemples qui suivent sont donnés pour une paroi latérale 25 comprenant un bord recourbé 26 vers l'extérieur. Le mors fixe 2b est formé par le corps de préhension 7. Plus précisément, le corps de préhension 7 comprend une surface de contact avant 17 qui est destinée à venir en contact avec la surface externe de la paroi latérale 25 du récipient 24. La surface de contact avant 17 présente une forme complémentaire de celle de la surface externe de la paroi latérale 25 et plus précisément de la surface externe du bord recourbé 26 du récipient de cuisson 24. Plus particulièrement, la surface de contact avant 17 présente une portion plate 18 prolongée par une portion recourbée 19 vers l'intérieur du corps de préhension 7. Le corps de préhension 7 est de préférence en bakélite. Lorsque le dispositif de préhension amovible 1 est fixé sur le récipient de cuisson 24, ce dernier est sensiblement perpendiculaire à un plan tangent à la paroi latérale 25 du récipient de cuisson 24. Le mors mobile 2a présente une forme complémentaire de celle de la surface interne de la paroi latérale 25 et plus précisément de la surface interne du bord recourbé 26 du récipient de cuisson 24.

En variante, les deux mors formant pince 2a, 2b du dispositif de préhension amovible 1 peuvent être adaptés pour être fixés sur une paroi latérale droite sans bord recourbé.

Le mors mobile 2a est prolongé par un bras 15 coulissant dans une glissière 27 prévue dans le corps de préhension 7. Le bras 15 s'étend selon la direction longitudinale (X). Il présente une forme aplatie.

Le dispositif électromécanique 5, 5a, 5b, 5c peut comprendre un moteur électrique 5, un électroaimant 5a, un servomoteur 5c, un vérin pneumatique ou un vérin électrique 5b, par exemple.

De préférence, le dispositif électromécanique 5, 5a, 5b, 5c est un moteur électrique 5 alimenté en courant par la source d'énergie électrique 6 et présentant un arbre 20 entraîné en rotation, comme représenté sur les figures 1 à 3. De manière encore plus préférée, le moteur électrique 5 comprend un réducteur. La vitesse de rotation du moteur électrique 5 est d'au moins de 340 tours par minute, et de préférence de 360 tours par minute. Le couple du moteur est d'au moins de 80 mN/m et de préférence de 100 mN/m.

Le dispositif d'actionnement 3 comprend des premiers moyens de transmission 8 adaptés à transmettre le mouvement de rotation du moteur électrique 5 à des deuxièmes moyens de transmission 9 solidaires du mors mobile 2a pour entraîner le déplacement en translation du mors mobile 2a entre la position d'ouverture et la position fermée.

Selon une variante possible, les premiers moyens de transmission 8 comprennent une tige filetée 8 entraînée en rotation par le moteur électrique 5. Les deuxièmes moyens de transmission 9 comprennent un élément mobile 9 muni d'un orifice fileté s'engageant dans la tige filetée 8. La rotation de la tige filetée 8 entraîne le déplacement en translation de l'élément mobile 9 le long de celle-ci et par conséquent le déplacement du mors mobile 2a entre la position ouverte et la position fermée. La tige filetée 8 peut être une vis filetée sans fin. La tige filetée 8 est reliée à l'arbre 20 du moteur électrique 5. La tige filetée 8, l'arbre 20 et les mors formant pince mobiles 2a, 2b sont sensiblement alignés selon la direction longitudinale (X). La tige filetée 8 est mobile en rotation et immobile en translation.

La tige filetée 8 et l'orifice fileté de l'élément mobile 9 présentent un pas compris entre 0,65 mm et 0,85 mm pour bloquer le déplacement du mors mobile 2a lorsqu'il est en position fermée. De préférence, le pas est de 0,75 mm.

A titre d'exemple, pour une course du mors mobile 2a de 10 mm entre la position fermée et la position ouverte, correspondant à un déplacement transversal de l'élément mobile 9 le long de la tige filetée 8 de 10 mm, la vitesse du moteur est de 360 tours par minute, et le pas de la tige filetée 8 et de l'orifice fileté de l'élément mobile 9 est de 0,75 mm. Cette configuration permet de bloquer le déplacement du mors mobile 2a lorsqu'il est en position fermée de façon efficace. L'élément mobile 9 peut être un écrou par exemple.

En variante, le dispositif d'actionnement 3 peut comprendre un système à engrenages (pignon / crémaillère ou des roues coniques ou des cylindriques), un système à bille (vis à bille), des poulies, une courroie, une roue dentée, une chaine, une transmission par friction ou un système bielle manivelle / came.

Le mors mobile 2a peut être en inox, par exemple. Le mors mobile 2a est prolongé par un bras 15 rectiligne formant un coulisseau et s'étendant à l'intérieur du corps de préhension 7. Ce bras 15 coulisse dans un logement 27 prévu dans le corps de préhension 7 entre la position fermée et la position ouverte du mors mobile 2a. Les deuxièmes moyens de transmission 9 et plus précisément l'élément mobile 9 est solidaire de ce bras 15. Dans les exemples des figures 1 à 3, l'élément mobile 9 est fixé au bras 15.

Les deuxièmes moyens de transmission 9 comprennent une butée 10 venant en contact avec une contre butée 11 prévue sur le corps de préhension 7 pour limiter l'ouverture du mors mobile 2a. Dans l'exemple des figures 1 à 3, la butée 10 est prévue sur l'élément mobile 9 et est formée par la surface latérale avant de celui-ci. L'élément mobile 9 ayant une forme générale cylindrique, sa surface latérale avant présente alors une forme annulaire. De même, la contre butée 11 du corps de préhension 7 présente une forme cylindrique. La contre butée 11 est positionnée à proximité de l'extrémité avant de la tige filetée 8 et entoure celle-ci. La position ouverte du mors mobile 2a est limitée par le contact de la contre butée 11 avec la butée 10. La position fermée du mors mobile 2a est limitée par le contact du mors mobile 2a avec la paroi latérale 25 du récipient de cuisson 24 qui est lui-même en contact avec le mors fixe 2b.

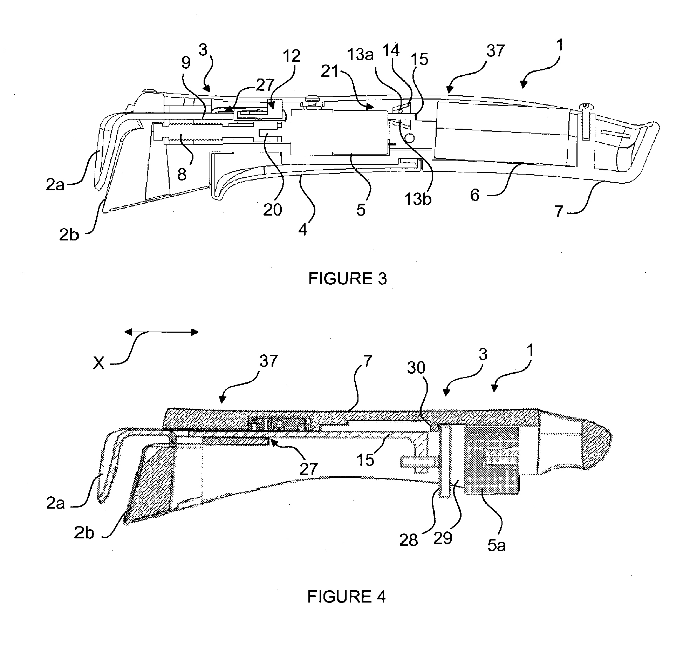

Sur la figure 3, le bras 15 du mors mobile 2a se prolonge sensiblement jusqu'au milieu du dispositif de préhension amovible 1.

Le dispositif de préhension amovible 1 comprend des moyens de blocage 21 pour bloquer les moyens de fixation en position fermée. Dans cet exemple, les moyens de fixation comprennent deux mors 2a, 2b. Les moyens de blocage 21 permettent de bloquer le mors mobile 2a en position fermée. Les moyens de blocage 21 permettent d'éviter tout écartement du mors mobile 2a quand il est en position fermée par exemple, du fait d'une charge importante contenue dans l'ustensile culinaire pincé. Ils permettent de sécuriser le dispositif de préhension amovible 1. Les moyens de blocage 21 permettent également d'augmenter le pas de la tige filetée 8 et donc de diminuer le temps de fermeture du mors mobile 2a (ou la vitesse de rotation de la tige filetée) et d'augmenter le couple de serrage. La fonction sécurité est alors fournie par les moyens de blocage 21 et non plus la tige filetée 8.

Selon une variante possible, les moyens de blocage 21 sont montés mobiles en translation dans le corps de préhension 7 suivant la direction longitudinale (X) entre une position de libération et une position de blocage dans laquelle ils immobilisent le mors mobile 2a dans sa position fermée.

Les moyens de blocage 21 comprennent des moyens de pincement 13a, 13b et une cage 14 dans laquelle sont logés les moyens de pincement 13a, 13b. La cage 14 entoure le mors mobile 2a. Les deux mors de pincement 13a, 13b sont disposés de part et d'autre du bras 15 de le mors mobile 2a et sont adaptés à immobiliser le mors mobile 2a par pincement. La cage 14 est positionnée à proximité de l'extrémité du bras 15 du mors mobile 2a. Les moyens de pincement 13a, 13b peuvent être des cylindres montés de façon libre en rotation dans la cage 14. La cage 14 peut être déplacée selon la direction longitudinale (X) de la position de libération à la position de blocage. Les moyens de blocage 21 sont actionnés mécaniquement. Les moyens de blocage 21 sont actionnés lorsque l'utilisateur pousse un bouton disposé sur le corps de préhension.

Selon une autre variante, les moyens de blocage 21 sont formés par le dispositif électromécanique 5, 5a, 5b, 5c pour bloquer les moyens de fixation en position fermée.

Dans un exemple de réalisation possible, le dispositif de préhension amovible 1 peut comprendre des moyens de fixation électromécaniques alimentés par la source d'énergie électrique 6 et des moyens de blocage 21 formés par un électroaimant alimenté par la source d'énergie électrique 6 (non représenté). L'électroaimant est disposé à proximité de l'extrémité arrière du dispositif de préhension amovible 1. Il coopère avec une plaque métallique solidaire du mors mobile 2a et plus précisément qui est fixée à l'extrémité du bras 15. Lorsque le mors mobile 2a est en position fermée, l'électroaimant est activé de façon à attirer la plaque pour la plaquer contre l'électroaimant, bloquant ainsi le mors mobile 2a en position fermée. L'électroaimant peut basculer entre un état de repos dans lequel le mors mobile 2a est débloqué et un état activé dans lequel l'électroaimant bloque le mors mobile 2a.

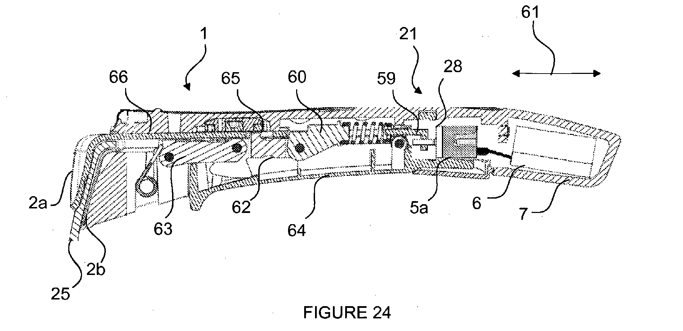

Selon une autre variante illustrée sur la figure 24, les moyens de blocage 21 sont formés par un électroaimant alimenté par la source d'énergie électrique 6 et le dispositif de préhension amovible 1 comprend des moyens de fixation mécaniques tels que ceux décrits dans la demande EP-1991098 à titre d'exemple. D'autres moyens de fixation mécaniques sont également utilisables.

Pour déplacer le mors mobile 2a vis-à-vis du mors fixe 2b situé en face, on utilise un coulisseau 60 monté en translation selon la direction longitudinale 61 par rapport au corps 7, et des première et seconde bielles pivotantes 62,63. La seconde bielle agit directement sur le mors mobile 2a. Un bouton de manoeuvre 64 monté basculant sur le corps 7 sollicite la seconde bielle 63 et par là la chaîne articulée 60, 62, 63 via un ergot 65 traversant une lumière de la tige 66 qui se termine par le mors 2a. Davantage de détails sont disponibles dans EP 2007260.

L'électroaimant est disposé à proximité de l'extrémité arrière du dispositif de préhension amovible 1. Il coopère avec une plaque métallique 28 solidaire du mors mobile 2a. Plus précisément, la plaque métallique 28 est fixée à un bras 59 lui-même relier au coulisseau 60. Lorsque le mors mobile 2a est en position fermée, l'électroaimant est activé de façon à attirer la plaque 28 pour la plaquer contre l'électroaimant, bloquant ainsi le mors mobile 2a en position fermée. L'électroaimant peut basculer entre un état de repos dans lequel le mors mobile 2a est débloqué et un état activé dans lequel l'électroaimant bloque le mors mobile 2a.

En variante, les moyens de blocage 21 peuvent comprendre une genouillère ou une roue irréversible.

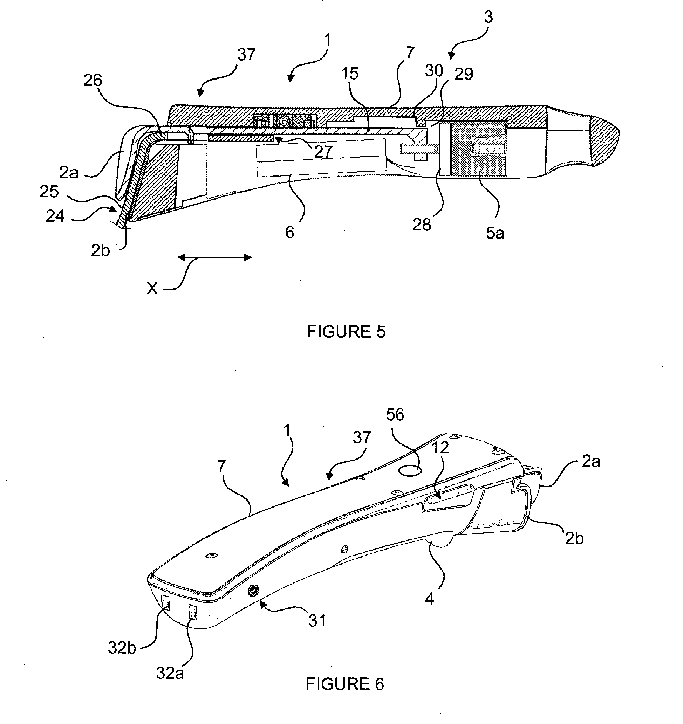

Les moyens de commande 4, 12, 22, 56 comprennent un bouton de commande 56, représenté sur la figure 6, accessible depuis l'extérieur du corps de préhension 7 et un circuit électronique (non représenté) relié au bouton de commande 56 et au dispositif électromécanique 5, 5a, 5b, 5c. Dans les exemples des figures 1 à 3, le bouton de commande 56 est disposé sous le dispositif de préhension amovible 1. Lorsque l'utilisateur actionne le bouton de commande 56, un signal est transmis au circuit électronique qui commande la rotation du moteur électrique 5.

Les moyens de commande 4, 12, 22, 56 peuvent comprendre un commutateur 12 accessible depuis l'extérieur du corps de préhension 7 pour sélectionner manuellement le sens de rotation du moteur électrique 5. Un premier sens de rotation est dédié à l'ouverture du mors mobile 2a. Un deuxième sens de rotation opposé est dédié à la fermeture du mors mobile 2a. Par exemple, lorsque le sens de rotation dédié à la fermeture du mors mobile 2a est préalablement sélectionné avec le commutateur 12, une pression sur le bouton de commande 56 entraîne la rotation du moteur électrique 5 dans ce sens de rotation et la fermeture du mors mobile 2a.

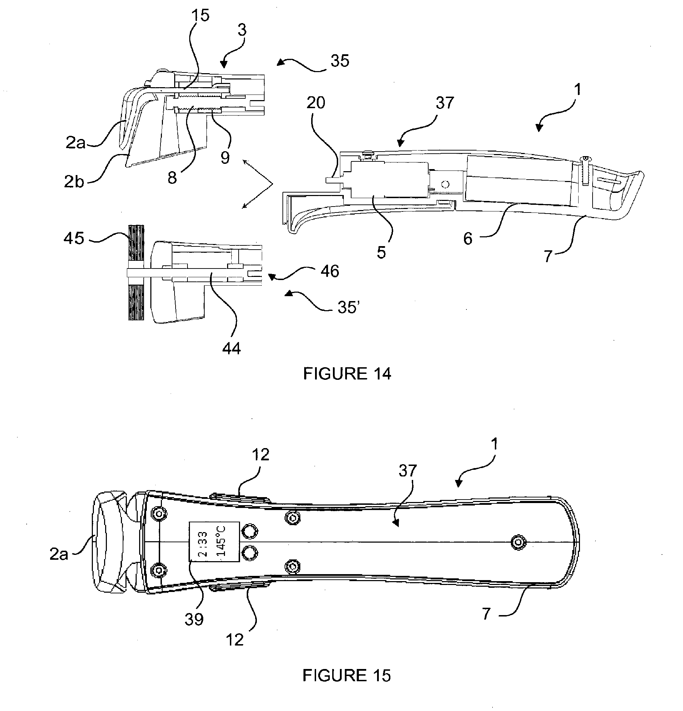

Dans l'exemple de la figure 15, les moyens de commande 4, 12, 22, 56 comprennent deux commutateurs 12. Chaque commutateur 12 est disposé sur une des parois latérales du dispositif de préhension amovible 1.

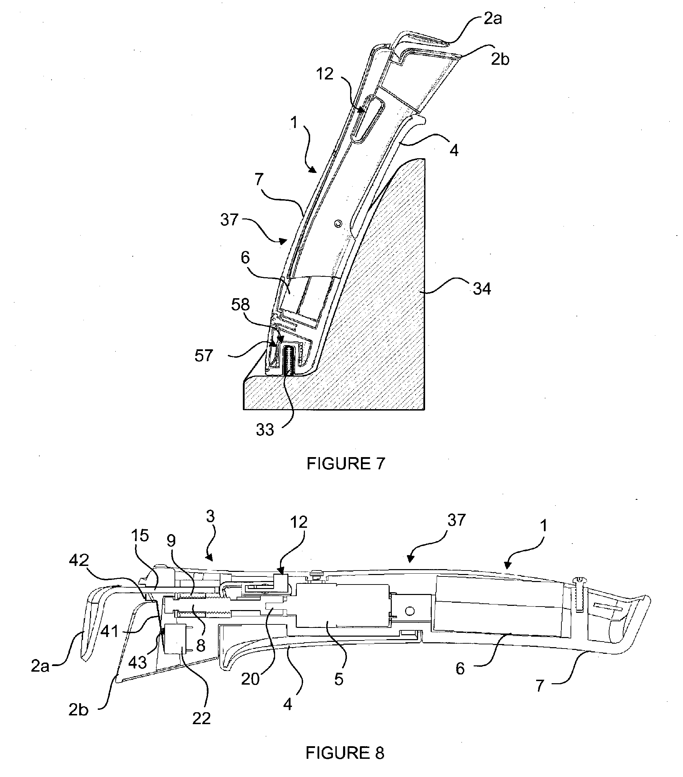

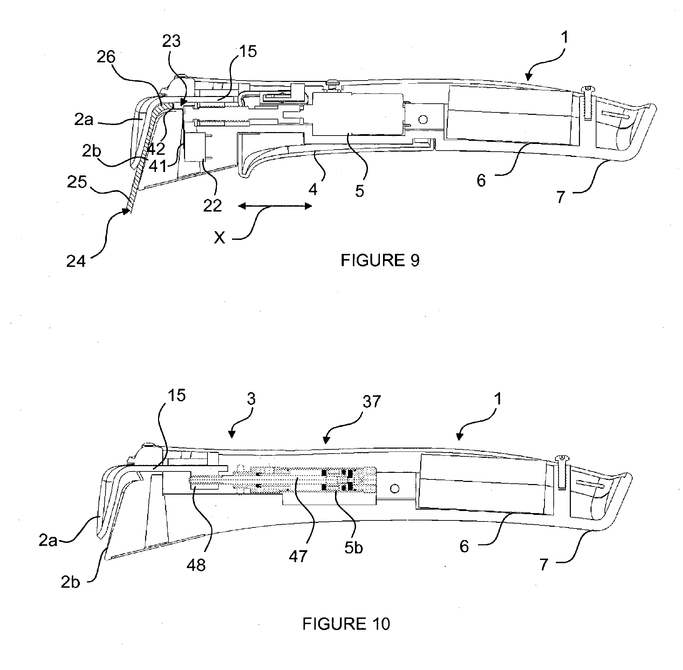

En variante, les moyens de commande 4, 12, 22, 56 peuvent comprendre un capteur 22 pour détecter la présence du dispositif de préhension amovible 1 contre ou à proximité immédiate du récipient de cuisson 24, comme illustré sur les figures 8 et 9. Le capteur 22 comprend un commutateur 22 relié à un bras 41 mobile. Le bras 41 comprend un ergot 42 à l'une de ses extrémité qui est mobile en translation dans une fente 23 prévue dans le corps de préhension 7 entre une position désactivée lorsque le dispositif de préhension amovible 1 n'est pas positionné sur le récipient de cuisson 24 (figure 8) et une position activée lorsque le dispositif de préhension amovible 1 est positionné sur le récipient de cuisson 24 (figure 9). L'ergot 42 est mobile en translation sensiblement suivant la direction longitudinale (X). La fente 23 est disposée dans le prolongement de la portion recourbée 19 du mors fixe 2b. Lorsque le mors fixe 2b est en contact avec la paroi latérale 25 du récipient de cuisson 24, l'extrémité du bord recourbé 26 vient s'insérer dans la fente 23 en déplaçant l'ergot 42 vers l'arrière du dispositif de préhension amovible 1. Ceci entraine le déplacement du bras 41 vers le commutateur 22 qui vient appuyer sur un bouton 43 prévu sur le commutateur 22. Le commutateur 22 est alors dans sa position activée, il transmet un signal au circuit électrique qui détecte alors la mise en place du dispositif de préhension amovible 1 sur le récipient de cuisson 24. Un actionnement des moyens de commande 4, 12, 22, 56 par l'utilisateur entraine la rotation du moteur électrique 5 dans le sens de rotation qui permet la fermeture du mors mobile 2a.

En variante, l'activation du commutateur 22 peut entraîner la fermeture automatique du mors mobile 2a sans intervention de l'utilisateur.

Selon un autre mode de réalisation possible, le dispositif de préhension 1 comprend un module amovible 35 séparable du corps de préhension 7, comme représenté sur la figure 14. Le module amovible 35 comporte le dispositif mécanique et le dispositif d'actionnement 3. Dans cet exemple, le dispositif mécanique comprend les moyens de fixation comportant les mors formant pince 2a, 2b. Le corps de préhension 7 comprend le moteur électrique 5 et la source d'énergie 6. Le dispositif d'actionnement 3 est connectable de façon amovible au moteur électrique 5. Plus précisément, la tige fileté 8 est connectable de façon amovible à l'arbre 20 du moteur électrique 5. La tige fileté 8 comprend un logement 46 à son extrémité arrière qui est destiné à recevoir l'arbre 20 du moteur électrique 5. Le module amovible 35 peut s'emboiter sur la face avant du corps de préhension 7. Le module amovible 35 peut être connecté au corps de préhension 7 et déconnecté de ce dernier de manière simple. Ainsi, lorsque le module amovible 35 comprenant les mors formant pince 2a, 2b est détaché du corps de préhension 7, il est possible de connecter un module amovible complémentaire 35' intégrant une autre fonction que celle de pincement telle qu'une fonction de nettoyage, par exemple.

La figure 14 illustre à titre d'exemple un module amovible complémentaire 35' comprenant un dispositif mécanique comportant une brosse rotative 45. La brosse rotative 45 est reliée à l'une de ses extrémités à un arbre 44. Lorsque le module amovible complémentaire 35' est emboité dans le corps de préhension 7, un logement 46 prévu sur l'arbre 44 du module amovible complémentaire 35' reçoit l'arbre 20 du moteur électrique 5. De cette façon, la brosse rotative 45 peut être entrainée par le moteur électrique 5.

En variante, la brosse peut être remplacée par un agitateur pour brasser les aliments, les écraser ou les mixer.

Cette amovibilité des modules 35, 35' permet ainsi au dispositif de préhension 1 de fournir des fonctions complémentaires comme le nettoyage des récipients de cuissons ou le brassage, mixage, broyage d'aliments, par exemple.

Selon un autre mode de réalisation illustré sur les figures 4 et 5, le dispositif électromécanique 5, 5a, 5b, 5c comprend un électroaimant 5a. L'électroaimant 5a peut basculer entre un état de repos dans lequel la pince est en position ouverte et un état activé dans lequel il maintient la pince en position fermée.

Comme dans le mode de réalisation précédent, le mors mobile 2a est prolongé par un bras 15 coulissant dans une glissière 27 prévue dans le corps de préhension 7. Le bras 15 s'étend selon la direction longitudinale (X) et comprend une plaque métallique 28 à son extrémité opposée au mors mobile 2a. La plaque métallique 28 s'étend dans un plan sensiblement perpendiculaire à la direction longitudinale (X). La plaque métallique 28 peut être constituée un matériau ferromagnétique. Elle est mobile en translation suivant la direction longitudinale (X) dans un logement 29 délimité en partie par l'électroaimant 5a et par une butée 30. La largeur du logement 29 correspond à la distance de déplacement du mors mobile 2a par rapport au mors fixe 2b.

Lorsque le mors mobile 2a est dans sa position ouverte (figure 4) et que l'utilisateur appuie sur les moyens de commande, l'électroaimant 5a est activé de façon à attirer la plaque métallique 28 pour qu'elle soit collée contre lui. Le mors mobile 2a se retrouve en position fermée (figure 5).

Inversement, si l'utilisateur appuie sur les moyens de commande lorsque le mors mobile 2a est dans sa position ouverte, l'électroaimant 5a est désactivé. Le champ électromagnétique est coupé et plus aucune force d'attraction n'est exercée sur la plaque métallique 28. Le mors mobile 2a peut alors être déplacé librement selon la direction longitudinale (X) dans le logement 29. Le mors mobile 2a peut être ouvert en déplaçant légèrement le dispositif de préhension amovible 1 suivant la direction longitudinale (X) et dans un sens opposé au récipient de cuisson 24.

Comme pour le mode de réalisation précédent, le dispositif d'actionnement 3, la source d'énergie électrique 6 et les moyens de commande (non représentés) sont logés dans le corps de préhension 7.

Selon un autre mode de réalisation possible représenté sur la figure 10, le dispositif électromécanique 5, 5a, 5b, 5c comprend un vérin électrique 5b comportant un piston 47 mobile entre un état rétracté dans lequel la pince est en position fermée (figure 10) et un état déployé dans lequel la pince est en position ouverte. Le piston 47 est relié au bras 15 du mors mobile 2a via une pièce de liaison 48. Le bras 15 et la pièce de liaison 48 forment le dispositif d'actionnement 3. Le piston 47 est mobile en translation suivant la direction de translation (X).

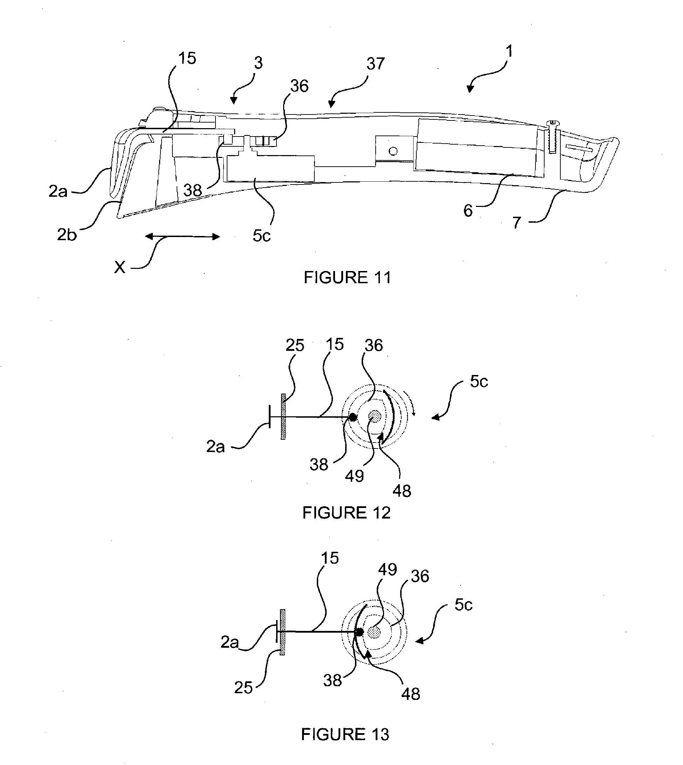

Selon un autre mode de réalisation possible représenté sur la figure 11, le dispositif électromécanique 5, 5a, 5b, 5c comprend un servomoteur 5c entraînant la rotation d'un élément excentrique 36. Le mouvement de rotation de l'élément excentrique 36 autour d'un axe 49 entraine un déplacement transversal, suivant la direction longitudinale (X), d'un plot 38 solidaire du mors mobile 2a et plus précisément solidaire du bras 15 du mors mobile 2a. L'élément excentrique 36, le plot 38 et le bras 15 forment le dispositif d'actionnement 3. L'élément excentrique 36 comprend une fente 48 pour recevoir le plot 38. L'élément excentrique 36 est mobile en rotation entre une position d'ouverture du mors mobile 2a (figure 12) dans laquelle le plot 38 est dégagé de la fente 48 et une position de fermeture du mors mobile 2a (figure 13) dans laquelle le plot 38 est engagé dans la fente 48. La fente 48 présente une forme courbe en arc de cercle. Lorsque le plot 38 s'engage dans la fente 48, le mors mobile 2a et le bras 15 effectuent une translation vers le servomoteur 5c. Le mors mobile 2a est attiré vers le mors fixe 2b.

La source d'énergie électrique 6 peut comprendre une source d'énergie électrique rechargeable (accumulateur ou super capacité) ou une ou plusieurs piles. Par exemple, l'accumulateur peut présenter une tension de 3,6 Volt et une capacité de 780 milliampères*hrs. L'énergie électrique peut être récupérée sur une plaque à induction par induction au moyen d'un élément conducteur disposé sur le fond du récipient de cuisson 24.

Dans le cas de l'utilisation d'une source d'énergie électrique rechargeable, le dispositif de préhension amovible 1 comprend des moyens de connexion électromagnétique pour permettre le rechargement en courant de la source d'énergie électrique rechargeable. On entend par « moyens de connexion électromagnétiques », des moyens qui peuvent être soit électriques, soit magnétiques.

Les moyens de connexion électromagnétiques peuvent comprendre une prise femelle 31 du type prise « jack », comme illustré sur la figure 6. Cette prise femelle 31 est disposée sur le corps de préhension 7 du dispositif de préhension amovible 1. Elle peut être disposée sur la paroi latérale du corps de préhension 7. La prise femelle 31 est connectable à une source d'énergie, par exemple le secteur via un cordon d'alimentation comprenant une fiche mâle type fiche « jack » adapté à s'insérer dans la prise femelle 31 du dispositif de préhension amovible 1.

Les moyens de connexion électromagnétique peuvent comprendre deux bornes de connexion électrique 32a, 32b reliées à la source d'énergie électrique rechargeable, comme illustré sur la figure 6. Le dispositif de préhension amovible 1 de la figure 6 comprend des bornes de connexion électrique 32a, 32b en plus de la prise femelle 31. Les bornes de connexion électrique 32a, 32b sont connectables de façon amovible à deux bornes de connexion électrique prévues sur une base de rechargement pour permettre le rechargement de la source d'énergie électrique 6 en courant électrique. Les bornes de connexion électrique 32a, 32b sont disposées à l'arrière du dispositif de préhension amovible 1. Les bornes de connexion électrique 32a, 32b peuvent être des plots de connexion ou des contacts. Le dispositif de préhension amovible 1 peut être posé sur la base de rechargement de façon à être sensiblement verticale ou incliné par rapport à la verticale lorsque la base de rechargement est posée sur un support horizontal. La base de rechargement est reliée à une source d'énergie, par exemple le secteur (230 V par exemple).

En variante, les moyens de connexion électromagnétiques peuvent comprendre une bobine d'induction secondaire 57 reliée à la source d'énergie électrique rechargeable, comme illustré sur la figure 7. La bobine d'induction secondaire 57 entoure une cavité 58 formée dans le corps de préhension 7 et dans laquelle vient s'insérer une bobine d'induction primaire 33 prévue sur une base de rechargement 34 lorsque la poignée est en position de rechargement. Ceci permet d'améliorer l'étanchéité du dispositif de préhension amovible 1.

Selon un mode de réalisation possible, le dispositif mécanique peut comprendre des moyens autres que les moyens de fixation. Il peut comprendre une brosse rotative reliée à un arbre entrainé par le dispositif électromécanique ou un agitateur pour brasser les aliments, les écraser ou les mixer, par exemple. Dans ce mode de réalisation, le dispositif de préhension amovible 1 comprend des moyens de fixation qui peuvent être actionnés manuellement ou électromécaniquement.

Selon un mode de réalisation possible (non représenté), le dispositif électromécanique peut comprendre une came entrainée en rotation par la tige filetée 8. La came est solidaire de la tige filetée 8 et est disposée à proximité de l'extrémité avant de la tige filetée 8. La came est logée dans un logement prévu dans le corps de préhension 7. Le logement débouche sur l'extérieur par la face supérieure du corps de préhension 7. La came est entraînée en rotation par le moteur électrique 5 de façon à être mobile entre une position de repos dans laquelle la came est logée à l'intérieur du logement et une position activée dans laquelle la came fait saillie sur la face supérieure du dispositif de préhension amovible 1. Dans la position de repos, l'axe principal de la came est sensiblement parallèle au plan horizontal du dispositif de préhension amovible 1. Dans la position activée, l'axe principal de la came est sensiblement perpendiculaire au plan horizontal du dispositif de préhension amovible 1 et orienté vers le haut lorsque le dispositif de préhension amovible 1 est fixé au récipient de cuisson 24 posé sur un support horizontal. Dans cette position activée, la came fait saillie sur la face supérieure du dispositif de préhension amovible 1 et permet de soulever plus ou moins le rebord d'un couvercle posé sur le récipient de cuisson 24 pour régler le débit de la vapeur lorsque des aliments sont chauffés dans le récipient de cuisson 24.

En variante, le dispositif électromécanique peut comprendre une roue dentée entrainée en rotation par la tige filetée 8 qui est elle-même entrainée par le moteur électrique 5 (non représenté). La roue dentée est solidaire de la tige filetée 8 et est disposée à proximité de l'extrémité avant de la tige filetée 8. La roue dentée est logée dans un logement prévu dans le corps de préhension 7. Le logement débouche sur l'extérieur par la face supérieure du corps de préhension 7. La roue dentée est entraînée en rotation par le moteur électrique 5 de façon à entraîner une crémaillère disposée sur le couvercle. La crémaillère entraîne en rotation une pale permettant de brasser des aliments (purée, poêlée de légume, soupe par exemple) disposés dans le fond du récipient de cuisson 24.

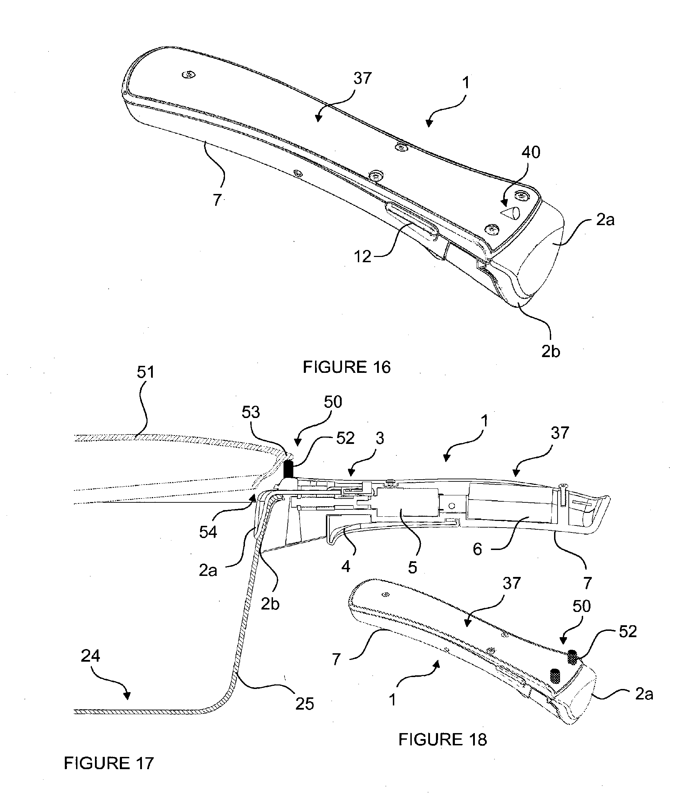

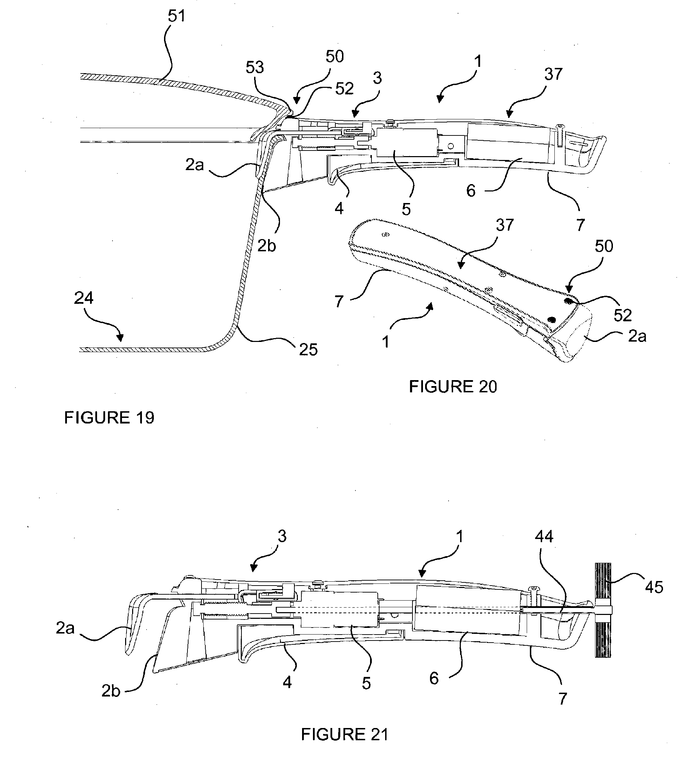

En variante et comme représenté sur les figures 17 à 20, le dispositif de préhension amovible 1 peut comprendre des moyens de soulèvement 50 permettant de soulever un couvercle 51 posé sur un récipient 24. La figure 17 représente une coupe longitudinale du dispositif de préhension amovible 1 fixé sur un récipient 24 et comprenant des moyens de soulèvement 50 en position de soulèvement. La figure 19 représente une coupe longitudinale du dispositif de préhension amovible 1 fixé sur le récipient 24. Les moyens de soulèvement 50 sont en position de repos.

Les moyens de soulèvement 50 comprennent deux pistons 52 actionnés par un moteur et un dispositif d'actionnement (non représentés). Ce moteur et le dispositif électromécanique 5, 5a, 5b, 5c permettant l'actionnement des mors 2a, 2b sont alimentés par la source d'énergie 6. Les pistons 52 sont mobiles en translation suivant une direction perpendiculaire à la direction longitudinale (X) entre une position de repos (figures 19 et 20) dans laquelle ils sont rentrés (complètement ou quasiment) dans le corps de préhension 7 et une position de soulèvement (figures 17 et 18) dans laquelle ils font saillies sur la face supérieure 37 du corps de préhension 7 et sensiblement perpendiculairement à cette dernière.

Les pistons 52 sont positionnés à proximité des mors 2a, 2b et alignés le long du bord avant du dispositif de préhension suivant une direction perpendiculaire à la direction longitudinale (X).

Le dispositif de préhension 1 pince la paroi latérale 25 du récipient 24 par le dessus de la paroi. Comme représenté sur la figure 19, lorsque les pistons 52 sont en position de repos (rétractés), le couvercle 51 est conformé pour reposer sur les pistons et recouvrir le mors mobile 2a de façon à laisser le moins d'espace entre le couvercle et le dispositif de préhension 1. Le couvercle 51 comprend un bord d'appui 53 sur sa périphérie externe sur lequel vient s'appuyer les pistons 52.

Lorsque les pistons 52 sont en position de soulèvement (figures 17, 18), ces derniers sont en contact avec le bord d'appui 53 du couvercle 51 et repoussent ce dernier vers le haut de façon à former un espace 54 entre le couvercle 51 et le mors mobile 2a du dispositif de préhension 1. Un espace est ainsi formé entre le couvercle 51 et le rebord supérieur du récipient 24 pour laisser passer la vapeur.

En variante, le dispositif mécanique comprend les moyens de soulèvement 50. Les moyens de soulèvement 50 sont actionnés par le dispositif d'actionnement 3, qui est lui-même entrainé par le dispositif électromécanique 5, 5a, 5b, 5c (non illustré). Les moyens de fixation sont actionnés manuellement.

Selon le mode de réalisation représenté sur la figure 21, le dispositif mécanique peut comprendre une brosse 45 comportant un arbre 44 entrainé en rotation par un moteur 5. Ce dernier actionne à la fois la brosse 45 et le dispositif d'actionnement 3 qui entraine le mors mobile 2a des moyens de fixations. La brosse 45 peut servir à nettoyer des articles culinaires comme le récipient 24, par exemple. Le dispositif de préhension amovible 1 forme alors une poignée multifonctions évitant l'utilisation d'autres ustensiles.

En variante, le dispositif de préhension amovible 1 peut comprendre deux bornes de connexion électrique reliées à la source d'énergie électrique 6 pour alimenter un dispositif électrique externe au dispositif de préhension amovible 1 (non représentés). Les deux bornes de connexion sont disposées sur la face avant du dispositif de préhension amovible 1 et sont destinées à être connectées à deux autres bornes de connexion prévues sur un récipient de cuisson. Le dispositif électrique externe peut être une résistance électrique disposée sous le récipient de cuisson pour le chauffer ou un agitateur disposé sur le couvercle, par exemple.

Le dispositif de préhension amovible 1 peut comprendre des moyens d'affichage 39 alimentés par la source d'énergie électrique 6 et reliés au circuit électronique, comme illustré sur la figure 15. Ces moyens d'affichage 39 peuvent comprendre un écran à cristaux liquides par exemple, pour permettre, entre autre, d'afficher l'autonomie de la source d'énergie électrique 6, l'heure, le temps de cuisson restant ou la température du récipient de cuisson. L'écran à cristaux liquides est disposé sur la face supérieure 37 du dispositif de préhension amovible 1.

Le dispositif de préhension amovible 1 peut comprendre des moyens de mesure tel un capteur de température ou un dispositif pour déterminer le poids des aliments contenus dans le récipient de cuisson 24, par exemple. La température ou le poids peuvent être affichés sur l'écran à cristaux liquides. Le dispositif de préhension amovible 1 peut comprendre une horloge et un chronomètre (« timer »). Les moyens de mesure sont alimentés par la source d'énergie électrique 6 et reliés au circuit électronique.

Le dispositif de préhension amovible 1 peut comprendre des moyens de communication sans fil pour recevoir et/ou transmettre des informations à une station de base. Les moyens de communication peuvent comprendre un émetteur et/ou un récepteur radiofréquence alimentés par la source d'énergie électrique 6 et reliés au circuit électronique. Par exemple, la station de base peut transmettre des recettes de cuisine au dispositif de préhension amovible 1. Ces dernières sont affichées sur un écran à cristaux liquides. Le dispositif de préhension amovible 1 peut transmettre des signaux représentatifs de la température du récipient de cuisson à la station de base.

Le dispositif de préhension amovible 1 peut comprendre des moyens d'éclairage 40, telle une diode par exemple, pour éclairer les aliments dans le récipient de cuisson 24. Les moyens d'éclairage 40 sont disposés sur la face supérieure 37 du dispositif de préhension amovible 1 et à l'avant de celui-ci. Les moyens d'éclairage 40 sont alimentés par la source d'énergie électrique 6.

La carte ou circuit électronique peut gérer le sens de rotation du moteur, la détection du serrage du mors 2a mobile, l'affichage d'information sur l'état du dispositif de préhension amovible 1 (ouvert/fermée, autonomie, problème particulier), et la charge des batteries, par exemple.

Selon un mode de fonctionnement possible, avant l'utilisation de l'article culinaire ou récipient de cuisson, l'utilisateur accoste la poignée ou dispositif de préhension amovible 1 qui est en position ouverte sur la paroi latérale 25 d'un récipient de cuisson 24.

Lorsque l'utilisateur appuie sur le bouton de commande 56 le moteur électrique 5 se met en marche, faisant tourner la tige filetée 8. L'élément mobile ou écrou 9 se translate et entraine le mors mobile 2a ou fourchette. Lorsque le mors mobile 2a arrive au contact de la calotte, le moteur électrique 5 s'arrête, une surintensité du moteur ayant été détectée et transmise au circuit électronique.

Pendant l'utilisation de l'article culinaire, lorsque le dispositif de préhension amovible 1 est saisi par l'utilisateur, les moyens de blocage 21 (sécurité mécanique) empêchent l'actionnement du mors mobile 2a, et donc son ouverture accidentelle pendant un déplacement du récipient de cuisson 24, par exemple.

Après utilisation de l'article culinaire, en appuyant sur le bouton de commande 56, le moteur électrique 5 se remet en marche ouvrant le mors mobile 2a. Le circuit électronique « connaît » l'état de la poignée qui est en position fermée dans ce cas et gère le sens de rotation du moteur électrique 5 pour activer le sens de rotation qui permet l'ouverture de la poignée. En variante, l'utilisateur peut choisir manuellement le sens de rotation du moteur électrique 5 via un commutateur 12.

Si la source d'énergie 6 est une batterie, la base de rechargement 34 permet de recharger la poignée après utilisation.

En variante, au repos, le dispositif de préhension amovible 1 est en position fermée via l'utilisation d'un ressort de rappel, par exemple. Le bouton de commande 56 ne sert qu'à ouvrir le mors mobile 2a. Quand le bouton de commande 56 est relâché, le mors mobile 2a se referme automatiquement au moyen du ressort.

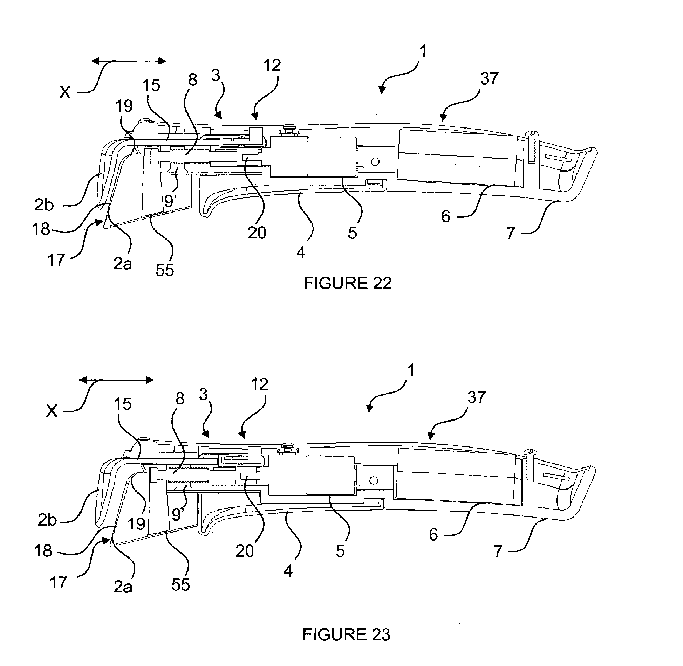

Selon un mode de réalisation possible représenté sur les figures 22 et 23, le corps de préhension 7 comprend une partie avant mobile 55 formant le mors mobile 2a. Cette partie avant mobile 55 comprend une surface de contact avant 17 destinée à venir en contact avec la surface externe de la paroi latérale 25 du récipient 24. Le mors fixe 2b est prolongé par un bras 15 solidaire du corps de préhension 7. Le mors fixe 2b comprend une surface de contact interne destinée à venir en contact avec la surface interne de la paroi latérale 25 du récipient 24. La partie avant mobile 55 est mobile en translation suivant la direction longitudinale (X) entre une position de fermeture (figure 22) dans laquelle les mors 2a, 2b peuvent pincer la paroi latérale 25 du récipient 24 et une position ouverte (figure 23). La partie avant mobile 55 est mobile entre le mors fixe 2b et le reste du corps de préhension 7.

La partie avant mobile 55 est actionnée par le dispositif d'actionnement 3. Le dispositif d'actionnement 3 comprend une tige filetée 8 entraînée en rotation par le moteur électrique 5, et un élément mobile 9' solidaire de la partie avant mobile 55 (mors mobile 2a) et muni d'un orifice fileté dans lequel s'engage la tige filetée 8. La rotation de la tige filetée 8 entraîne le déplacement en translation de l'élément mobile 9' le long de celle-ci et le déplacement en translation de la partie avant mobile 55. Le moteur électrique 5 est alimenté par une source d'énergie électrique 6. Des moyens de commande 4, 12, 22, 56 sont prévus pour commander le fonctionnement et l'arrêt du moteur 5. Le dispositif de préhension amovible 1 représenté dans l'exemple des figures 22 et 23 peut comprendre les caractéristiques décrites ci-dessus pour le dispositif de préhension amovible 1 de l'exemple des figures 1 et 2. Ce dispositif de préhension amovible 1 comprend moins d'éléments mécaniques, permet de dégager de la place au dessus du dispositif d'actionnement 3 et est moins fragile que le dispositif de préhension amovible 1 comprenant un mors mobile 2a à son extrémité avant. La partie avant mobile 55 est protégée par le mors fixe 2b.

En variante, les moyens de commande 4, 12, 22, 56 comprennent un dispositif de sécurité complémentaire 4 empêchant l'actionnement des moyens de fixation lorsque le dispositif de préhension 1 est en main. Le dispositif de sécurité complémentaire 4 comprend un bouton 4 avantageusement disposé sous le corps de préhension 7. Lorsque l'utilisateur prend en main la poignée, il actionne obligatoirement le dispositif de sécurité complémentaire 4, empêchant l'actionnement des moyens de fixation. Le bouton 4 peut être relié à un commutateur coupant l'alimentation électrique. Le dispositif de sécurité complémentaire 4 forme une sécurité du type « homme mort ».

## Revendications

1. Dispositif de préhension amovible (1) pour un récipient de cuisson d'aliments (24), ledit dispositif de préhension amovible (1) comprenant un corps de préhension (7), des moyens de fixation connectables au récipient de cuisson (24) et déconnectables de celui-ci, et une source d'énergie électrique (6),
**caractérisé en ce qu'**il comprend :
- un dispositif électromécanique (5, 5a, 5b, 5c) alimenté par la source d'énergie (6) et adapté à actionner un dispositif mécanique, et
- des moyens de commande (4, 12, 22, 56) pour commander le fonctionnement et l'arrêt du dispositif électromécanique (5, 5a, 5b, 5c).

2. Dispositif de préhension amovible (1) selon la revendication 1, **caractérisé en ce que** le dispositif mécanique comprend lesdits moyens de fixation.

3. Dispositif de préhension amovible (1) selon la revendication 1 ou 2, **caractérisé en ce qu'**il comprend des moyens de blocage (21) pour bloquer lesdits moyens de fixation en position fermée.

4. Dispositif de préhension amovible (1) selon la revendication 3, **caractérisé en ce que** les moyens de blocage (21) sont formés par ledit dispositif électromécanique (5, 5a, 5b, 5c) pour bloquer lesdits moyens de fixation en position fermée.

5. Dispositif de préhension amovible (1) selon la revendication 2, **caractérisé en ce que** les moyens de fixation comprennent deux mors (2a, 2b) formant pince dont au moins un mors (2a) mobile par rapport au corps de préhension (7) et actionné par le dispositif électromécanique (5, 5a, 5b, 5c).

6. Dispositif de préhension amovible (1) selon l'une quelconque des revendications 1 à 5, **caractérisé en ce qu'**il comprend un module amovible (35) séparable du corps de préhension (7) et comportant le dispositif mécanique, tandis que le corps de préhension (7) comprend le dispositif électromécanique (5, 5a, 5b, 5c) et la source d'énergie (6).

7. Dispositif de préhension amovible (1) selon l'une quelconque des revendications 1 à 6, **caractérisé en ce que** le dispositif électromécanique (5, 5a, 5b, 5c) comprend un moteur électrique (5).

8. Dispositif de préhension amovible (1) selon l'une quelconque des revendications 2 à 7, **caractérisé en ce que** ledit dispositif de préhension amovible (1) comprend un dispositif d'actionnement (3) entrainé par le dispositif électromécanique (5, 5a, 5b, 5c) et adapté à actionner lesdits moyens de fixation.

9. Dispositif de préhension amovible (1) selon la revendication 8, **caractérisé en ce que** le dispositif d'actionnement (3) comprend une tige filetée (8) entraînée en rotation par le moteur électrique (5), et un élément mobile (9) solidaire du mors mobile (2a) et muni d'un orifice fileté dans lequel s'engage la tige filetée (8) dont la rotation entraîne le déplacement en translation de l'élément mobile (9) le long de celle-ci et le déplacement en translation du mors mobile (2a).

10. Dispositif de préhension amovible (1) selon la revendication 9, **caractérisé en ce que** la tige filetée (8) et l'orifice fileté de l'élément mobile (9) présentent un pas compris entre 0,65 mm et 0,85 mm.

11. Dispositif de préhension amovible (1) selon l'une quelconque des revendications 4 à 10, **caractérisé en ce que** les moyens de blocage (21) comprennent un électroaimant pouvant basculer entre un état de repos dans lequel le mors mobile (2a) est débloqué et un état activé dans lequel l'électroaimant bloque le mors mobile (2a).

12. Dispositif de préhension amovible (1) selon la revendication 3, **caractérisé en ce que** les moyens de blocage (21) comprennent deux mors de pincement (13a, 13b) mobiles dans une cage (14), les deux mors de pincement (13a, 13b) étant disposés de part et d'autre d'un bras (15) prolongeant perpendiculairement le mors mobile (2a), et la cage (14) étant mobile le long du bras (15) de le mors mobile (2a) entre une position de libération et une position de blocage dans laquelle les moyens de blocage (21) immobilisent le mors mobile (2a) dans sa position fermée.

13. Dispositif de préhension amovible (1) selon la revendication 2, **caractérisé en ce que** le dispositif électromécanique (5, 5a, 5b, 5c) comprend un électroaimant (5a) pouvant basculer entre un état de repos dans lequel la pince est en position ouverte et un état activé dans lequel il maintient la pince en position fermée.

14. Dispositif de préhension amovible (1) selon la revendication 2, **caractérisé en ce que** le dispositif électromécanique (5, 5a, 5b, 5c) comprend un vérin électrique (5b) comportant un piston (47) relié à l'un des deux mors (2a, 2b) formant pince et mobile entre un état rétracté dans lequel la pince est en position fermée et un état déployé dans lequel la pince est en position ouverte.

15. Dispositif de préhension amovible (1) selon la revendication 2, **caractérisé en ce que** le dispositif électromécanique (5, 5a, 5b, 5c) comprend un servomoteur (5c) entraînant la rotation d'un élément excentrique (36), lequel entraine le déplacement d'un des deux mors (2a, 2b) formant pince.

16. Dispositif de préhension amovible (1) selon l'une quelconque des revendications 1 à 15, **caractérisé en ce que** les moyens de commande (4, 12, 22, 56) comprennent un capteur (22) pour détecter la présence du dispositif de préhension amovible (1) contre ou à proximité immédiate du récipient de cuisson (24).

17. Dispositif de préhension amovible (1) selon l'une quelconque des revendications précédentes, **caractérisé en ce qu'**il comprend des moyens de connexion électromagnétique reliées à la source d'énergie électrique (6) pour alimenter un dispositif électrique externe au dispositif de préhension amovible (1) ou recharger ladite source d'énergie électrique (6) via une source d'alimentation externe au dispositif de préhension amovible (1).

18. Dispositif de préhension amovible (1) selon la revendication 17, **caractérisé en ce que** les moyens de connexion électromagnétique comprennent une bobine d'induction secondaire (57) entourant une cavité (58) formée dans le corps de préhension (7) et dans laquelle vient s'insérer une bobine d'induction primaire (33) prévue sur une base de rechargement (34).

19. Dispositif de préhension amovible (1) selon l'une quelconque des revendications précédentes, **caractérisé en ce qu'**il comprend des moyens de mesure d'un paramètre physique, des moyens d'affichage de données (39), des moyens d'éclairage du récipient (40) et/ou des moyens de communication sans fil alimentés par la source d'énergie électrique (6).

## Patentansprüche

1. Abnehmbare Greifvorrichtung (1) für einen Behälter zum Kochen von Speisen (24), wobei diese abnehmbare Greifvorrichtung (1) aus einem Griffkörper (7), Befestigungsmitteln, die mit dem Kochbehälter (24) verbunden und von diesem Kochbehälter getrennt werden können, und einer elektrischen Stromquelle (6) besteht, **dadurch gekennzeichnet, dass** sie Folgendes umfasst:
- eine elektromechanische Vorrichtung (5, 5a, 5b, 5c), die von der Stromquelle (6) gespeist wird und so eingerichtet ist, dass sie eine mechanische Vorrichtung betätigt, und
- Steuerungseinrichtungen (4, 12, 22, 56), mit denen der Betrieb und der Stopp der elektromechanischen Vorrichtung (5, 5a, 5b, 5c) gesteuert werden.

2. Abnehmbare Greifvorrichtung (1) nach Anspruch 1, **dadurch gekennzeichnet, dass** die mechanische Vorrichtung die genannten Befestigungsmittel umfasst.

3. Abnehmbare Greifvorrichtung (1) nach Anspruch 1 oder 2, **dadurch gekennzeichnet, dass** sie Arretiermittel (21) umfasst, die die genannten Befestigungsmittel in geschlossener Stellung arretieren.

4. Abnehmbare Greifvorrichtung (1) nach Anspruch 3, **dadurch gekennzeichnet, dass** die Arretiermittel (21) von der genannten elektromechanischen Vorrichtung (5, 5a, 5b, 5c) gebildet werden, um die genannten Befestigungsmittel in geschlossener Stellung zu arretieren.

5. Abnehmbare Greifvorrichtung (1) nach Anspruch 2, **dadurch gekennzeichnet, dass** die Befestigungsmittel zwei zangenförmig angeordnete Backen (2a, 2b) umfassen, von denen mindestens eine Backe (2a) im Verhältnis zum Griffkörper (7) beweglich ist und durch die elektromechanische Vorrichtung (5, 5a, 5b, 5c) betätigt wird.

6. Abnehmbare Greifvorrichtung (1) nach einem der Ansprüche 1 bis 5, **dadurch gekennzeichnet, dass** sie ein abnehmbares Modul (35) umfasst, das vom Griffkörper (7) getrennt werden kann und die mechanische Vorrichtung umfasst, während der Griffkörper (7) die elektromechanische Vorrichtung (5, 5a, 5b, 5c) und die Stromquelle (6) umfasst.

7. Abnehmbare Greifvorrichtung (1) nach einem der Ansprüche 1 bis 6, **dadurch gekennzeichnet, dass** die elektromechanische Vorrichtung (5, 5a, 5b, 5c) einen Elektromotor (5) umfasst.

8. Abnehmbare Greifvorrichtung (1) nach einem der Ansprüche 2 bis 7, **dadurch gekennzeichnet, dass** diese abnehmbare Greifvorrichtung (1) eine Betätigungsvorrichtung (3) umfasst, die von der elektromechanischen Vorrichtung (5, 5a, 5b, 5c) angetrieben wird und so eingerichtet ist, dass sie die genannten Befestigungsmittel betätigt.

9. Abnehmbare Greifvorrichtung (1) nach Anspruch 8, **dadurch gekennzeichnet, dass** die Betätigungsvorrichtung (3) eine Gewindestange (8), die vom Elektromotor (5) in Drehung versetzt wird, und ein bewegliches Element (9) umfasst, das fest mit der beweglichen Backe (2a) verbunden und mit einer Gewindebohrung versehen ist, in die die Gewindestange (8) eingreift, durch deren Drehung das bewegliche Element (9) entlang der Gewindestange und die bewegliche Backe (2a) verschoben werden.

10. Abnehmbare Greifvorrichtung (1) nach Anspruch 9, **dadurch gekennzeichnet, dass** die Gewindestange (8) und die Gewindebohrung des beweglichen Elements (9) eine Gewindesteigung zwischen 0,65 mm und 0,85 mm aufweisen.

11. Abnehmbare Greifvorrichtung (1) nach einem der Ansprüche 4 bis 10, **dadurch gekennzeichnet, dass** die Arretiermittel (21) einen Elektromagneten umfassen, der kippbar ist zwischen einem Ruhezustand, in dem die bewegliche Backe (2a) entsperrt wird, und einem aktiven Zustand, in dem der Elektromagnet die bewegliche Backe (2a) arretiert.

12. Abnehmbare Greifvorrichtung (1) nach Anspruch 3, **dadurch gekennzeichnet, dass** die Arretiermittel (21) zwei Klemmbacken (13a, 13b) umfassen, die sich in einem Gehäuse (14) bewegen können, wobei die beiden Klemmbacken (13a, 13b) zu beiden Seiten eines Arms (15) angeordnet sind, der die bewegliche Backe (2a) senkrecht verlängert, und wobei sich das Gehäuse (14) entlang des Arms (15) der beweglichen Backe (2a) zwischen einer Freigabeposition und einer Arretierposition bewegen kann, in der die Arretiermittel (21) die bewegliche Backe (2a) in ihrer geschlossenen Stellung arretieren.

13. Abnehmbare Greifvorrichtung (1) nach Anspruch 2, **dadurch gekennzeichnet, dass** die elektromechanische Vorrichtung (5, 5a, 5b, 5c) einen Elektromagneten (5a) umfasst, der kippbar ist zwischen einem Ruhezustand, in dem die Backe sich in geöffneter Stellung befindet, und einem aktivierten Zustand, in dem er die Backe in ihrer geschlossenen Stellung hält.

14. Abnehmbare Greifvorrichtung (1) nach Anspruch 2, **dadurch gekennzeichnet, dass** die elektromechanische Vorrichtung (5, 5a, 5b, 5c) einen Elektrozylinder (5b) mit einem Kolben (47) umfasst, der mit einer der beiden zangenförmig angeordneten Backen (2a, 2b) verbunden ist und sich zwischen einem eingefahrenen Zustand, in dem sich die Backe in geschlossener Stellung befindet, und einem ausgefahrenen Zustand bewegen kann, in dem sich die Backe in geöffneter Stellung befindet.

15. Abnehmbare Greifvorrichtung (1) nach Anspruch 2, **dadurch gekennzeichnet, dass** die elektromechanische Vorrichtung (5, 5a, 5b, 5c) einen Stellmotor (5c) umfasst, der ein exzentrisches Element (36) in Drehung versetzt, das die Verschiebung einer der beiden Backen (2a, 2b) bewirkt.

16. Abnehmbare Greifvorrichtung (1) nach einem der Ansprüche 1 bis 15, **dadurch gekennzeichnet, dass** die Steuerungseinrichtungen (4, 12, 22, 56) einen Sensor (22) umfassen, der erkennt, wenn sich die abnehmbare Greifvorrichtung (1) am Kochbehälter (24) oder in dessen unmittelbarer Nähe befindet.

17. Abnehmbare Greifvorrichtung (1) nach einem der vorhergehenden Ansprüche, **dadurch gekennzeichnet, dass** sie elektromagnetische Kopplungseinrichtungen umfasst, die mit der elektrischen Stromquelle (6) verbunden sind, um über eine außerhalb der abnehmbaren Greifvorrichtung (1) befindliche Stromversorgungsquelle eine externe, außerhalb der abnehmbaren Greifvorrichtung (1) befindliche elektrische Vorrichtung zu speisen oder die genannte elektrische Stromquelle (6) wiederaufzuladen.

18. Abnehmbare Greifvorrichtung (1) nach Anspruch 17, **dadurch gekennzeichnet, dass** die elektromagnetischen Kopplungseinrichtungen eine sekundäre Induktionsspule (57) umfassen, die eine Aussparung (58) im Griffkörper (7) umgibt und in die eine primäre Induktionsspule (33) eingeschoben wird, die an einer Ladestation (34) angebracht ist.

19. Abnehmbare Greifvorrichtung (1) nach einem der vorhergehenden Ansprüche, **dadurch gekennzeichnet, dass** sie Vorrichtungen zur Messung eines physikalischen Parameters, Datenanzeigeeinrichtungen (39), Vorrichtungen zur Beleuchtung des Behälters (40) und/oder drahtlose Kommunikationseinrichtungen umfasst, die von der elektrischen Stromquelle (6) gespeist werden.

## Claims

1. Removable grip (1) for food cooking recipients (24), the aforementioned removable grip (1) comprising the body of the grip (7), means for connecting it to and disconnecting it from the cooking recipient (24), and an electric power source (6), **characterised in that** it includes:
- an electromechanical device (5, 5a, 5b, 5c) powered by the power source (6) and adapted to actuate a mechanical appliance, and
- means of control (4, 12, 22, 56) to turn the electromechanical device on and off (5, 5a, 5b, 5c).

2. Removable grip (1) according to claim 1, **characterised in that** the mechanical device includes the aforementioned fastening means.

3. Removable grip (1) according to claim 1 or 2, **characterised in that** it includes locking means (21) to lock the aforementioned fastening means in a closed position.

4. Removable grip (1) according to claim 3, **characterised in that** the locking means (21) are formed by the aforementioned electromechanical device (5, 5a, 5b, 5c) to lock the aforementioned fastening means in a closed position.

5. Removable grip (1) according to claim 2, **characterised in that** the fastening means include two jaws (2a, 2b) forming a pincer, of which at least one of the jaws (2a) is movable in relation to the body of the grip (7) and is actuated by the electromechanical device (5, 5a, 5b, 5c).

6. Removable grip (1) according to any one of claims 1 to 5, **characterised in that** it includes a removable module (35) that can be separated from the body of the grip (7) and which includes the mechanical device, whilst the body of the grip (7) includes the electromechanical device (5, 5a, 5b, 5c) and the power source (6)

7. Removable grip (1) according to any one of claims 1 to 6, **characterised in that** the electromechanical device (5, 5a, 5b, 5c) includes an electric motor (5).

8. Removable grip (1) according to any one of claims 2 to 7, **characterised in that** the aforementioned removable grip (1) includes an operating device (3) driven by the electromechanical device (5, 5a, 5b, 5c) and adapted to actuate the aforementioned fastening means.

9. Removable grip (1) according to claim 8, **characterised in that** the operating device (3) includes a threaded rod (8) driven in rotation by the electronic motor (5), and a moving part (9) that is fixed to the movable jaw (2a) and has a threaded hole in which the threaded rod (8) fits, whose rotation drives the displacement of the moving part (9) along it and the displacement in transaltion of the movable jaw (2a).

10. Removable grip (1) according to claim 9, **characterised in that** the threaded rod (8) and the threaded hole of the moving part (9) presents a distance of between 0.65 mm and 0.85 mm.

11. Removable grip (1) according to any one of claims 4 to 10, **characterised in that** the locking means (21) comprise an electromagnet that can switch between resting state, in which the moving jaw (2a) is unlocked and in an active state in which the electromagnet locks the moving jaw (2a).

12. Removable grip (1) according to claim 3, **characterised in that** the locking means (21) comprise two moving pincer jaws (13a, 13b) in a cage (14), with the two pincer jaws (13a, 13b) having an arm (15) on both sides coming out perpendicularly from the moving jaw (2a), and the cage (14) being able to move along the arm (15) of the moving jaw (2a) between a freed position and a locked position in which the locking means (21) immobilise the moving jaw (2a) in its closed position.

13. Removable grip (1) according to claim 2, **characterised in that** the electromechanical device (5, 5a, 5b, 5c) includes an electromagnet (5a) that can switch between a resting state, in which the pincer is in the open position, and an active state, in which it locks the pincer in closed position.

14. Removable grip (1) according to claim 2, **characterised in that** the electromechanical device (5, 5a, 5b, 5c) includes an electric actuator (5b), comprising a piston (47) linked to one of the two jaws (2a, 2b) forming a pincer and moves between a retracted state, in which the pincer is in the closed position, and a deployed state, in which the pincer is in the open position.

15. Removable grip (1) according to claim 2, **characterised in that** the electromechanical device (5, 5a, 5b, 5c) includes a servomotor (5c) driving the rotation of an eccentric element (36), which drives the displacement of one of the two jaws (2a, 2b) forming the pincer.

16. Removable grip (1) according to any one of claims 1 to 15, **characterised in that** the control means (4, 12, 22, 56) comprise a sensor (22) to detect the presence of the removable grip (1) against or in the immediate proximity of the cooking recipient (24).

17. Removable grip (1) according to any one of previous claims, **characterised in that** it includes electromagnetic connection means linked to the electric power source (6) to power an electrical device external to the removable grip (1) or recharge the aforementioned electric power source (6) via a power source external to the removable grip (1).

18. Removable grip (1) according to claim 17, **characterised in that** the electromagnetic connection means comprise a secondary induction coil (57) surrounding a cavity (58) formed in the body of the grip (7) and in which is inserted a primary induction coil (33) provided on a charging base (34).

19. Removable grip (1) according to any one of the previous claims, **characterised in that** it includes means of measuring a physical parameter, means of displaying data (39), means of lighting the recipient (40) and/or wireless communication means powered by the electric power source (6).
